# EUROPÄISCHE PATENTANMELDUNG

(11) **EP 2 460 597 A1**
(43) Veröffentlichungstag der Anmeldung: **06.06.2012**
(21) Anmeldenummer: 10193275.4
(22) Anmeldetag: 01.12.2010
(51) Int. Cl.: B21B 37/52, B21B 38/04

(54) **Verfahren zum Ansteuern einer Tandemwalzstrasse, Steuer- und/oder Regeleinrichtung für eine Tandemwalzstrasse, maschinenlesbarer Programmcode, Speichermedium und Tandemwalzstrasse**

(71) Anmelder: Siemens Aktiengesellschaft, 80333 München (DE)
(72) Erfinder: Felkl, Hans-Joachim, 91301, Forchheim (DE)

(57) **Zusammenfassung**

Verfahren zum Ansteuern einer Tandemwalzstrasse, Steuer- und/oder Regeleinrichtung für eine Tandemwalzstrasse, maschinenlesbarer Programmcode, Speichermedium und Tandemwalzstrasse

Die Erfindung betrifft ein Verfahren zum Ansteuern einer Tandemwalzstrasse (6), insbesondere einer Kaltband-Tandemwalzstrasse, zum Herstellen eines Bandes (B), insbesondere eines Metallbandes, wobei in einer Produktionsrichtung (8) des Bandes (B) mehrere Antriebe (10, W₁, W₂, W₃) vorgesehen sind, deren Geschwindigkeiten (v₀, v₁, v₂, v₃) über eine Kaskadensteuerung mit einem Leitantrieb angepasst werden, wobei eine Eigenschaft (h₀, h₁, h₂, h₃) des Bandes (B) bestimmt wird und in Abhängigkeit dieser Eigenschaft (h₀, h₁, h₂, h₃) die Wirkrichtung der Kaskadensteuerung geändert wird, damit die Bandgeschwindigkeit und somit der Zug im Einlauf der Tandemwalzstrasse (6) möglichst konstant bleibt.

## Beschreibung

Verfahren zum Ansteuern einer Tandemwalzstrasse, Steuer- und/oder Regeleinrichtung für eine Tandemwalzstrasse, maschinenlesbarer Programmcode, Speichermedium und Tandemwalzstrasse

Die Anmeldung betrifft ein Verfahren zum Ansteuern einer Tandemwalzstrasse, insbesondere einer Kaltband-Tandemwalzstrasse, zum Herstellen eines Bandes, insbesondere eines Metallbandes. Die Anmeldung betrifft weiterhin eine Steuer- und/oder Regeleinrichtung für eine Tandemwalzstrasse, einen maschinenlesbaren Programmcode für eine solche Steuer- und/oder Regeleinrichtung, ein Speichermedium mit einem darauf gespeicherten maschinenlesbaren Programmcode sowie eine Tandemwalzstrasse umfassend eine solche Steuer- und/oder Regeleinrichtung.

In Anlagen, bei denen mehrere Antriebe über ein Band, insbesondere ein Metallband, z.B. im Falle einer Walzanlage, oder über eine Bahn, wie z.B. eine Papierbahn, miteinander gekoppelt sind, werden häufig Geschwindigkeitsverstellungen eines Antriebs auf die Nachbarantriebe weitergeleitet, um Störungen des Zuges im Band oder in der Bahn zu minimieren. Dieser Vorgang wird als Kaskadierung bezeichnet. Unter "Antrieben" werden hierbei insbesondere von einem elektrischen Motor angetriebene Teile der Anlage mit der zugehörigen Regelung verstanden. Antriebe bei einer Walzanlage sind z.B. Walzgerüste, S-Rollen (sogenannte Bridles), Haspeln, Umlenkrollen, etc.

Bei der Kaskadierung gibt es feststehende Wirkrichtungen. Beim Walzen wird z.B. vorzugsweise in Richtung langsam laufendere Walzgerüste kaskadiert. Dabei wird innerhalb des Anlagenteils, dessen Antriebe kaskadiert werden, ein Leitantrieb oder Speedmaster-Antrieb definiert. Antriebe flussauf des Leitantriebs werden in Wirkrichtung Einlauf, d.h. entgegen der Produktionsrichtung des Bandes kaskadiert (upstream), während Antriebe flussab des Leitantriebs in Wirkrichtung Auslauf (downstream), d.h. in Produktionsrichtung kaskadiert werden.

Bei einer mehrteiligen Anlage, z.B. bei einer Walzanlage mit einer Durchlaufglühe (Continuous Annealing Line, CAL) und einer Kaltband-Tandemwalzstrasse (Tandem Cold Mill, TCR) oder einer zweigerüstigen Kaltband-Tandemwalzstrasse (Double Cold Reduction Mill, DCR) als Anlagenteile, verändert sich durch die Kaskadierung die Bandgeschwindigkeiten der Anlagenteile gegenüber einander. Unter Tandemstrasse wird hierbei eine Walzgerüstanordnung verstanden, die aus wenigstens zwei in einer Produktionsrichtung des Metallbandes hintereinander geschalteten Walzgerüsten aufgebaut ist. Um der auf die weiteren Anlagenteile übergreifenden Veränderung der Bandgeschwindigkeit entgegenzuwirken, sind zwischen den Anlagenteilen Schlingenspeicher vorgesehen. Bei einer technologisch zugempfindlichen Anlagenanordnung wie eine Walzanlage mit einer Durchlaufglühe und einem nachgeschalteten inline-Walzwerk in Form einer Kaltband-Tandemwalzstrasse reicht die anlagentechnische Entkopplung durch einen Schlingenspeicher jedoch in der Regel nicht aus, um das Band störungsfrei durch die Durchglühe zu transportieren.

Aus der WO 2008/043605 A2 ist eine Walzanlage zur Herstellung eines Metallbands bekannt, bei der ein erstes Walzgerüst einer Tandemstrasse in der Funktion eines Treibers eingesetzt ist, um einen mechanischen Zugaufbau im Metallband zu realisieren und somit auf ein Aggregat mit Bandzug erhöhender Funktion, wie z.B. eine S-Rolle, zu verzichten. Da die Funktion des ersten Walzgerüsts geändert wird, stellt nun das in Produktionsrichtung zweite Walzgerüst innerhalb der Tandemstrasse das erste walzaktive Gerüst dar.

Der Erfindung liegt die Aufgabe zugrunde, einen störungsfreien Betrieb einer Anlage, insbesondere einer Behandlungslinie mit einer gekoppelten Tandemwalzstrasse, die über eine Regelung mit kaskadierten Stelleingriffen (Kaskadensteuerung) betrieben wird, zu ermöglichen sowie eine entsprechende Steuer- und/oder Regeleinrichtung, einen Programmcode, ein Speichermedium und eine Walzanlage hierzu bereitzustellen.

Der verfahrensmäßige Teil der Aufgabe wird gelöst durch ein Verfahren zum Ansteuern einer Tandemwalzstrasse, insbesondere einer Kaltband-Tandemwalzstrasse, zum Herstellen eines Bands, insbesondere eines Metallbands, wobei in einer Produktionsrichtung des Bandes mehrere Antriebe vorgesehen sind, deren Geschwindigkeiten über eine Kaskadensteuerung mit einem Leitantrieb angepasst werden, wobei eine Eigenschaft des Bandes bestimmt wird und in Abhängigkeit der Eigenschaft die Wirkrichtung der Kaskadensteuerung geändert wird.

Die Erfindung basiert auf der Erkenntnis, dass ein störungsfreier Betrieb zweier gekoppelten Anlagenteile gewährleistet ist, indem die Geschwindigkeit des Bandes zwischen zwei in Produktionsrichtung hintereinander geschalteten Anlagenteilen im Wesentlichen konstant gehalten wird. Ziel dabei ist, dass die Bandgeschwindigkeit und somit der Zug im Einlauf der Tandemwalzstresse, die den zweiten Anlagenteil bildet, konstant bleibt. Um dies zu erreichen, wird die Wirkrichtung der Kaskadensteuerung bei Bedarf geändert, um Störungen des Bandes im Einlauf der Tandemwalzstrasse zu minimieren, denn ein möglichst stationärer Einlauf resultiert in einen gleichmäßigen Verlauf des Bandes durch den vorgeschalteten Anlagenteil. Dank der vorgeschlagenen Regelung der Tandemwalzstrasse mit der Änderung der Wirkrichtung der Kaskadenregelung kann beispielsweise eine zugempfindliche Durchlaufglühe (CAL) für dünnes Material problemlos mit einem inline-Walzwerk gekoppelt werden, da der Bandzug in der Durchlaufglühe, die der Tandemwalzstrasse vorgeschaltet ist, wenig und insbesondere nicht gestört wird.

Beispielsweise wird zum Beginn des Betriebs der Walzanlage mit einer Durchlaufglühe und einer Tandemwalzstrasse ein letztes Walzgerüst der Tandemwalzstrasse als Speedmaster-Antrieb mit einer konstanten Geschwindigkeit gewählt, so dass eine upstream-Regelung der Antriebe entgegen der Produktionsrichtung erfolgt. Wenn im Betrieb der Walzanlage bedingt durch Schwankungen der Dicke des Metallbandes vor der Tandemstrasse ein Störverhalten einer zwischen der Durchlaufglühe und der Tandemstrasse angeordneten S-Rolle auftritt, wird diesem Störverhalten entgegengewirkt, indem die S-Rolle die Funktion des Speedmaster-Antriebs übernimmt, wodurch die Wirkrichtung der Kaskadierung sich in Richtung downstream, d.h. in Produktionsrichtung, ändert. Es kann somit der Leitantrieb im Betrieb der Walzanlage bei Bedarf mehrmals geändert werden, um die Bandgeschwindigkeit der S-Rolle zu beruhigen, wobei gleichzeitig am Ende der Tandemwalzstrasse das Metallband eine gewünschte, möglichst konstante Dicke aufweist.

Im Hinblick auf eine dynamische Regelung der Tandemwalzstrasse wird gemäß einer vorteilhaften Ausführung die Wirkrichtung der Kaskadensteuerung über eine Anpassung der Geschwindigkeitskorrekturen der Antriebe einstellbar aufgeteilt. Unter einstellbarer Aufteilung der Geschwindigkeitskorrekturen wird hierbei verstanden, dass durch die Kaskadensteuerung die Geschwindigkeiten aller Antriebe, einschließlich des Leitantriebs, zu einem gewissen Grad angepasst werden, wobei dieser Grad davon abhängig ist, ob die Geschwindigkeiten der Antriebe flussauf oder flussab geregelt werden sollen. In der Regel ist es so, dass der Speedmaster-Antrieb, z.B. das letzte Walzgerüst in Produktionsrichtung des Bandes, durch die Regelung eine konstante Geschwindigkeit aufweist. Gleichzeitig variieren die Geschwindigkeiten der weiteren Antriebe, so dass ein erster Antrieb, der am weitesten weg vom Speedmaster-Antrieb angeordnet ist, relativ große Geschwindigkeitsschwankungen aufweisen kann. Diese Schwankungen werden durch die einstellbare Anpassung der Geschwindigkeitskorrekturen auf alle Antriebe verteilt, indem durch die Kaskadierung die Geschwindigkeit des Speedmaster-Antriebs geringfügig geändert wird, so dass sie nicht mehr konstant ist, sondern minimale Fluktuationen aufweist. Es gilt hierbei, dass je größer die Fluktuationen der Geschwindigkeit des Speedmaster-Antriebs sind, desto kleiner sind die der anderen Antriebe. Durch eine stetige Erhöhung der Ungleichmäßigkeit der Geschwindigkeit des ursprünglichen Speedmaster-Antriebs bei einer gleichzeitigen Reduzierung der Geschwindigkeitskorrekturen der weiteren Antriebe "wandert" somit der Speedmaster-Antrieb in Richtung Einlauf, bis schließlich der erste Antrieb in Produktionsrichtung der Leitantrieb wird.

Gemäß einer weiteren vorteilhaften Ausführung wird als die Eigenschaft des Bandes die Dicke des Bandes bestimmt. Der wesentliche Vorteil hierbei ist, dass die Dicke des Bandes in direkter Relation zur Geschwindigkeit der Antriebe steht und Dickenschwankungen somit der Auslöser für die Fluktuationen der Geschwindigkeiten der Antriebe sind. Eine Geschwindigkeitsregelung auf Basis einer Messung der Banddicke hat sich daher als besonders wirkungsvoll erwiesen. Ist das Band im Einlauf der Walzstrasse stellenweise z.B. dicker, so wird die Geschwindigkeit der Walzen entsprechend verstellt, damit im Auslauf der Walzstrasse das Band eine konstante Dicke aufweist.

Vorzugsweise umfasst die Tandemwalzstrasse als Antriebe mindestens zwei hintereinander geschaltete Walzgerüste und die Eigenschaft des Bandes wird zumindest vor dem ersten Walzgerüst gemessen. Hierdurch werden Schwankungen der Eigenschaft des Bandes, insbesondere der Banddicke, Eigenschaft im Einlauf der Walzstrasse detektiert und durch eine geeignete Regelung der Drehgeschwindigkeiten der einzelnen Walzgerüsten wird das Band im Auslauf auf eine gewünschte, konstante Dicke heruntergewalzt. Um die Genauigkeit bei der Geschwindigkeitsregelung zu erhöhen, wird die Eigenschaft des Bandes zweckdienlicherweise zwischen den Antrieben der Tandemstrasse, insbesondere zwischen den einzelnen Antrieben, gemessen.

Nach einer bevorzugten Ausführungsvariante wird bei einer Kaskadierung entgegen der Produktionsrichtung das letzte Walzgerüst in Produktionsrichtung als Leitantrieb angesteuert. Dies ist besonders vorteilhaft, um eine möglichst konstante Bandgeschwindigkeit am Ende der Walzstrasse zu gewährleisten. Der letzte Antrieb einer Tandemwalzstrasse wird in der Regel für Speedmaster-Antrieb gewählt, wenn die Walzstrasse ein off-line-Walzwerk ist, d.h. eine entkoppelte Einheit bildet, der kein anderer Anlagenteil vorgeschaltet ist. In diesem Fall sind Schwankungen der Drehgeschwindigkeiten der Vorderantriebe, welche Schwankungen beim Zug des Bandes im Einlauf der Walzstrasse verursachen können, nicht von großer Bedeutung und das Aufwickeln des Bandes unter konstantem Bandzug wird unterstützt.

Wenn der Tandemwalzstrasse jedoch ein zugempfindlicher Anlagenteil vorgeschaltet ist, wie z.B. eine CAL, können die Zugschwankungen im Einlauf der Walzstrasse nicht ohne weiteres vernachlässigt werden. Da eine Entkopplung der CAL von der Tandemwalzstrasse durch einen Schlingenspeicher oder eine Tänzerrolle nicht zuverlässig ist, soll der variierende Zug auf eine andere Weise, z.B. durch eine geeignete Ansteuerung einer S-Rolle im Einlauf der Walzstrasse, ausgeglichen werden. Vor diesem Hintergrund umfasst nach einer weiteren bevorzugten Ausführungsvariante die Tandemwalzstrasse in Produktionsrichtung mindestens eine S-Rolle und die S-Rolle wird bei einer Kaskadierung in Produktionsrichtung als Leitantrieb angesteuert, so dass sie mit einer konstanten Drehgeschwindigkeit betrieben wird. Im Betrieb der Anlage kann dabei der Leitantrieb in Abhängigkeit von den im Einlauf und im Auslauf aktuell herrschenden Zuständen bezüglich Banddicke und Zugschwankungen bedarfsweise stufenlos oder stufenweise umgeschaltet werden.

Ergänzend dazu ist bevorzugt vorgesehen, dass die Geschwindigkeit der S-Rolle über eine Momentenvorsteuerung stabilisiert wird. In diesem Fall ist die S-Rolle ebenfalls der Speedmaster-Antrieb, die Momentenvorsteuerung wird vorzugsweise in der Dickenregelung berechnet. Eine geeignete Ausführung besteht darin, die Geschwindigkeitskorrektur des ersten Gerüstes in Produktionsrichtung gewichtet zu differenzieren. Die differenzierte Geschwindigkeitskorrektur beschreibt die erwartete und unerwünschte Beschleunigung der S-Rolle, die aus der Zugschwankung resultieren würde. Wird der S-Rolle rechtzeitig ein Antriebsmoment aufgeschaltet, das aus der erwarteten Beschleunigung und dem Trägheitsmoment der S-Rolle berechnet wird, wird die Bandgeschwindigkeit einlaufseitig der S-Rolle auch gegenüber störenden Zugschwankungen aus dem ersten Gerüst der Tandemstrasse beruhigt.

Der vorrichtungsmäßige Teil der Aufgabe wird gelöst durch eine Steuer- und/oder Regeleinrichtung für eine Tandemwalzstrasse, mit einem maschinenlesbaren Programmcode, welcher Steuerbefehle aufweist, die bei dessen Ausführung die Steuer- und/oder Regeleinrichtung zur Durchführung eines Verfahrens nach einer der vorhergehenden Ausführungen veranlassen.

Ferner wird die Aufgabe gelöst durch einen maschinenlesbaren Programmcode für eine Steuer- und/oder Regeleinrichtung für eine Tandemwalzstrasse, wobei der Programmcode Steuerbefehle aufweist, die die Steuer- und/oder Regeleinrichtung zur Durchführung des Verfahrens nach einer der vorhergehenden Ausführungen veranlassen.

Darüber hinaus wird die Aufgabe gelöst durch ein Speichermedium mit einem darauf gespeicherten solchen maschinenlesbaren Programmcode.

Schließlich wird die Aufgabe auch gelöst durch eine Tandemwalzstrasse, insbesondere eine Kaltband-Tandemwalzstrasse zum Herstellen eines Metallbandes, umfassend die oben beschriebene Steuer- und/oder Regeleinrichtung.

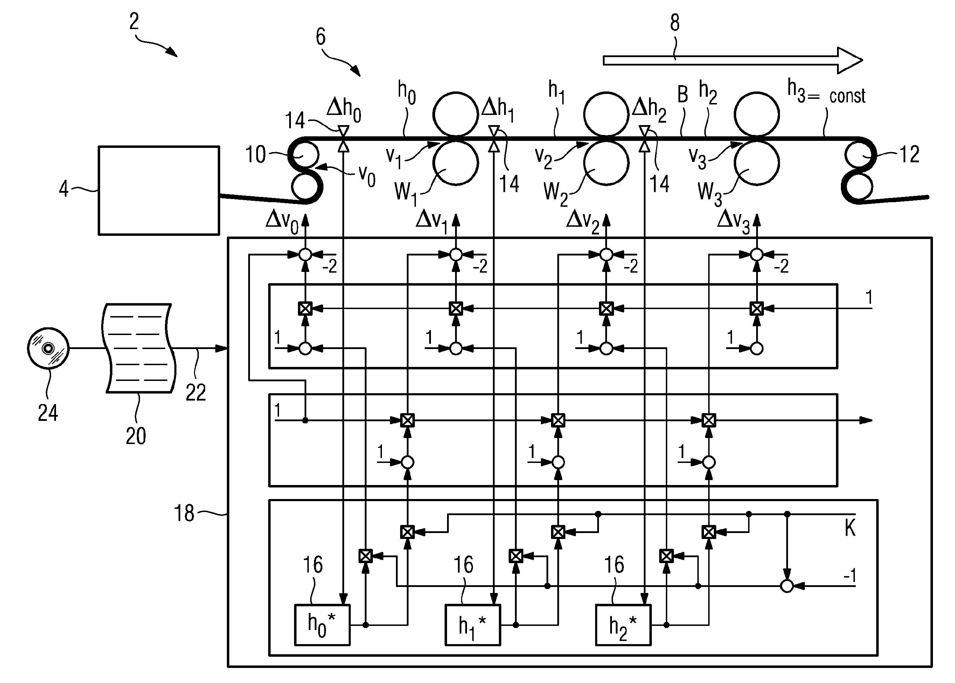

Ein Ausführungsbeispiel der Erfindung wird anhand einer Zeichnung näher erläutert. Hierin zeigt die einzige Figur schematisch und stark vereinfacht zwei Anlagenteile einer Gesamtanlage 2: nämlich eine Durchglühe (CAL), die schematisch durch den Block 4 angedeutet ist, und ein in-line Walzwerk in Form einer Kaltband-Tandemwalzstrasse 6 zum Herstellen eines Metallbandes B.

Die Tandemwalzstrasse 6 umfasst im gezeigten Ausführungsbeispiel drei walzaktive Walzgerüste W₁, W₂ und W₃, die in einer Produktionsrichtung 8 hintereinander geschaltet sind. Beim Walzen des Metallbands B findet bei sämtlichen Walzgerüsten W₁, W₂, W₃, eine nicht unwesentliche Dickenreduzierung des Metallbands B statt.

Im Einlauf der Tandemwalzstrasse 6 vor dem ersten Walzgerüst W₁ ist eine erste S-Rolle 10 (auch Bridle genannt) und im Auslauf der Tandemwalzstrasse 6 hinter dem letzten Walzgerüst W₁ ist eine zweite S-Rolle 12 (Bridle), angeordnet. Die S-Rollen 10, 12 führen das Metallband B und halten dessen internen Zugspannungen aufrecht.

Die erste S-Rolle 10 sowie die Walzgerüste W₁, W₂, W₃ stellen die wesentlichen Antriebe der Tandemwalzstrasse 6 dar, deren Geschwindigkeiten v₀, v₁, v₂, v₃ über eine Kaskadensteuerung im Betrieb angepasst werden. Weitere Antriebe können beispielsweise die zweite S-Rolle 12 sowie in der Figur nicht gezeigte Haspeln oder Umlenkrollen sein, die ebenfalls in die Kaskade eingebunden sind.

Vor den einzelnen Walzgerüsten W₁, W₂, W₃ sind Vorrichtungen 14 zum Messen der Banddicke vorgesehen. Jede der Vorrichtungen 14 liefet einen Istwert h₀, h₁, h₂ für die Banddicke, der in entsprechenden Dickenreglern 16 mit einem Sollwert h₀*, h₁* und h₂* verglichen wird. Aufgrund des Vergleichs der Istwerte h₀, h₁, h₂ mit den Sollwerten h₀*, h₁* und h₂* erfolgt eine Kaskadensteuerung der Geschwindigkeiten v₀, v₁, v₂, v₃ der ersten S-Rolle sowie der Walzgerüste W₁, W₂, W₃. Diese Geschwindigkeitskaskadierung wird durch eine Steuer- und/oder Regeleinrichtung 18 durchgeführt, der ein auf einem Speichermedium 24, wie z.B. einer Festplatte oder einer CD, gespeicherter maschinenlesbarer Programmcode 20 mit Steuerbefehlen 22 zugeordnet ist. Primäres Ziel der Dickenregelung inklusive dieser Kaskadensteuerung ist, dass die Banddicke h₃ im Auslauf der Tandemwalzstrasse 6, d.h. hinter dem letzten Walzgerüst W₃, konstant ist. Wenn eine Dickenschwankung des Bandes B erfasst wird, d.h. Δh₀≠0, Δh₁≠0 und Δh₂≠0, wird daher der Geschwindigkeiten v₀, v₁, v₂, v₃ der Antriebe 10, W₁, W₂ und W₃ eine Geschwindigkeitskorrektur Δv₀, Δv₁, Δv₂ und Δv₃ zugeführt.

Die Kaskadensteuerung ist durch eine Wirkrichtung gekennzeichnet. Bei einer Anordnung gemäß der Figur wirkt die Kaskadensteuerung normalerweise flussauf oder upstream in Richtung Einlauf, d.h. entgegen der Produktionsrichtung 8. Bei einer derartigen Regelung ist die Geschwindigkeitskorrektur Δv₃ des letzten Walzgerüsts W₃ gleich 0. Das Walzgerüst W₃ ist in diesem Fall ein Leitantrieb oder Speedmaster-Antrieb. Die Geschwindigkeitskorrekturen Δv₀, Δv₁, Δv₂ zum Erreichen einer konstanten Dicke h₃ werden somit auf die anderen Antriebe 10, W₁, W₂ aufgeteilt.

Diese Art von Regelung kann jedoch dazu führen, dass relativ starke Geschwindigkeitsfluktuationen im Einlauf der Walzstrasse 6 entstehen, welche Zugschwankungen des Bandes B in diesem Bereich nach sich ziehen. Diese Zugschwankungen können nicht vollständig durch Schlingenspeicher zwischen der Durchglühe 4 und der Walzstrasse 6 abgebaut werden und stören somit den Betrieb der zugempfindlichen Durchglühe 4.

Um den Zugschwankungen entgegenzuwirken und somit eine störungsfreie Ankopplung beider Anlagenteile 4, 6 zu ermöglichen, ist bei der Geschwindigkeitsregelung der Walzstrasse 6 ein Regelungsfaktor K vorgesehen, durch welchen die Wirkrichtung der Kaskadensteuerung geändert werden kann. Im gezeigten Ausführungsbeispiel kann K Werte zwischen 0 und 1 annehmen. Zu Beginn ist K=0, so dass, wie oben beschrieben, die Geschwindigkeitskorrektur Δv₃ des letzten Walzgerüsts W₃ gleich 0 ist, d.h. dass das Walzgerüst W₃ der Speedmaster-Antrieb im System ist. Um die Bandgeschwindigkeit der ersten S-Rolle 10 zu beruhigen, wird die Wirkrichtung der Kaskadensteuerung gedreht, indem bei K=1 die Geschwindigkeitskorrektur Δv₀ der ersten S-Rolle 10 gleich 0 wird und die S-Rolle 10 zum Speedmaster-Antrieb wird. Durch eine Änderung des Wertes des Regelungsfaktors K kann somit stufenlos der Speedmaster-Antieb umgeschaltet und die Wirkrichtung der Kaskadensteuerung geändert werden.

Der Regelungsfaktor K kann jedoch auch Werte zwischen 0 und 1 annehmen, wodurch die Wirkrichtung stufenweise umgedreht wird. Ein Regelungsfaktor 0<K<1 bewirkt, dass das Störverhalten der Drehzahl der ersten S-Rolle 10 durch eine gegensinnige Geschwindigkeitskorrekturaufschaltung verbessert wird. So bewirkt ein positiver Dickenfehler Δh₀>0 bei einem Regelungsfaktor K=0,95, dass hauptsächlich die Walzengeschwindigkeiten v₁, v₂, v₃ der Walzgerüste W₁, W₂ und W₃ erhöht werden. Da die Geschwindigkeit v₁ des ersten Walzgerüsts W₁ erhöht wird, steigt der Bandzug zwischen der ersten S-Rolle 10 und dem Walzgerüst W₁, infolge wird auch die S-Rolle 10 durch den erhöhten Bandzug beschleunigt. Durch den Faktor K=0,95 erhält die S-Rolle 10 jedoch einen kleinen Geschwindigkeitskorrekturwert v₀ von 5% in Richtung "verzögern", so dass die Ist-Geschwindigkeit der S-Rolle 10 durch die Überlagerung der Geschwindigkeitskorrektur Δv₀ mit der Zugreaktion dynamisch beruhigt wird.

Dank der Änderung der Wirkrichtung bei der Kaskadensteuerung der Walzstrasse 6 können zugempfindliche Anlagenteile 4, 6 miteinander gekoppelt werden. Insbesondere kann mit derselben Regelungssoftware ein DCR-Walzwerk realisiert werden, das als off-line und als in-line Walzwerk funktioniert. Die technologisch unterschiedlichen Anforderungen bezüglich der Wirkrichtung der Geschwindigkeitskaskade bei den beiden Einsatzfällen des DCR-Walzwerks werden dabei einfach durch die Parametrisierung des Regelungsfaktors K erfüllt.

## Patentansprüche

1. Verfahren zum Ansteuern einer Tandemwalzstrasse (6), insbesondere einer Kaltband-Tandemwalzstrasse, zum Herstellen eines Bandes (B), insbesondere eines Metallbandes, wobei in einer Produktionsrichtung (8) des Bandes (B) mehrere Antriebe (10, W₁, W₂, W₃) vorgesehen sind, deren Geschwindigkeiten (v₀, v₁, v₂, v₃) über eine Kaskadensteuerung mit einem Leitantrieb angepasst werden, wobei eine Eigenschaft (h₀, h₁, h₂, h₃) des Bandes (B) bestimmt wird und in Abhängigkeit der Eigenschaft (h₀, h₁, h₂, h₃) die Wirkrichtung der Kaskadensteuerung geändert wird.

2. Verfahren nach Anspruch 1,
wobei die Wirkrichtung der Kaskadensteuerung über eine Anpassung der Geschwindigkeitskorrekturen (Δv₀, Δv₁, Δv₂, Δv₃) der Antriebe (10, W₁, W₂, W₃) einstellbar aufgeteilt geändert wird.

3. Verfahren nach einem der vorhergehenden Ansprüche,
wobei die Dicke (h₀, h₁, h₂, h₃) des Bandes (B) bestimmt wird.

4. Verfahren nach einem der vorhergehenden Ansprüche,
wobei die Tandemwalzstrasse (6) als Antriebe (10, W₁, W₂, W₃) mindestens zwei hintereinander geschaltete Walzgerüste (W₁, W₂, W₃) umfasst und die Eigenschaft (h₀, h₁, h₂, h₃) des Bandes (B) zumindest vor dem ersten Walzgerüst (W₁) gemessen wird.

5. Verfahren nach Anspruch 4,
wobei die Eigenschaft (h₀, h₁, h₂, h₃) des Bandes (B) zwischen den Antrieben (10, W₁, W₂, W₃) der Tandemwalzstrasse (6) gemessen wird.

6. Verfahren nach einem der vorhergehenden Ansprüche,
wobei bei einer Kaskadierung entgegen der Produktionsrichtung (8) das letzte Walzgerüst (W₃) in Produktionsrichtung (8) als Leitantrieb angesteuert wird.

7. Verfahren nach einem der vorhergehenden Ansprüche,
wobei die Tandemwalzstrasse (6) in Produktionsrichtung (8) vor den Walzgerüsten mindestens eine S-Rolle (10) umfasst und die S-Rolle (19) bei einer Kaskadierung in Produktionsrichtung (8) als Leitantrieb angesteuert wird.

8. Verfahren nach Anspruch 7,
wobei die Drehgeschwindigkeit der S-Rolle (v₀) über eine Momentenvorsteuerung stabilisiert wird.

9. Steuer- und/oder Regeleinrichtung (18) für eine Tandemwalzstrasse (6), mit einem maschinenlesbaren Programmcode (20), welcher Steuerbefehle (22) aufweist, die bei dessen Ausführung die Steuer- und/oder Regeleinrichtung (18) zur Durchführung eines Verfahrens nach einem der Ansprüche 1 bis 8 veranlassen.

10. Maschinenlesbarer Programmcode (20) für eine Steuer- und/oder Regeleinrichtung (18) für eine Tandemwalzstrasse (6), wobei der Programmcode (20) Steuerbefehle (22) aufweist, die die Steuer- und/oder Regeleinrichtung (18) zur Durchführung des Verfahrens nach einem der Ansprüche 1 bis 8 veranlassen.

11. Speichermedium (24) mit einem darauf gespeicherten maschinenlesbaren Programmcode (20) gemäß Anspruch 10.

12. Tandemwalzstrasse (6), insbesondere Kaltband-Tandemwalzstrasse zum Herstellen eines Bandes (B), insbesondere eines Metallbandes, umfassend eine Steuer- und/oder Regeleinrichtung (18) nach Anspruch 9.
